# EUROPÄISCHE PATENTANMELDUNG

(11) **EP 3 181 662 A1**
(43) Veröffentlichungstag der Anmeldung: **21.06.2017**
(21) Anmeldenummer: 15200523.7
(22) Anmeldetag: 16.12.2015
(51) Int. Cl.: C10J 3/84, C10K 1/00, B01D 46/00

(54) **VERFAHREN ZUR AUFBEREITUNG DES PRODUKTGASES EINES BIOMASSEVERGASERS**

(71) Anmelder: Ligento green power GmbH, 90411 Nürnberg (DE)
(72) Erfinder: Tschaftary, Thomas, 90587 Veitsbronn (DE)
(74) Vertreter: Tergau & Walkenhorst Patentanwälte - Rechtsanwälte

(57) **Zusammenfassung**

Ein Verfahren zur Aufbereitung des Produktgases eines Biomassevergasers (40), bei dem das Produktgas einem Filterelement (18) zugeführt wird, und dem Filterelement (18) Luft zugeführt wird, soll einen möglichst unterbrechungsfreien Betrieb mit hohem Wirkungsgrad ermöglichen. Dazu wird in dem Filterelement (18) eine Temperatur zwischen 380°C und 440°C eingestellt, so dass in dem Filterelement (18) eine Teiloxidation von Restkohlenstoff in Asche erfolgt.

## Beschreibung

Die Erfindung betrifft ein Verfahren zur Aufbereitung des Produktgases eines Biomassevergasers, bei dem das Produktgas einem Filterelement zugeführt wird, und dem Filterelement Luft zugeführt wird. Sie betrifft weiter eine Aufbereitungsvorrichtung für das Produktgas eines Biomassevergasers, umfassend ein Filterelement mit einer Produktgaszuführung, einer Luftzuführung und einem Temperatureinstellelement.

Bei der Biomassevergasung wird Biomasse mit Hilfe eines Vergasungs- oder Oxidationsmittels (meist Luft, Sauerstoff oder Wasserdampf) durch eine Verschwelung in ein Produkt- oder Brenngas umgewandelt. Das Brenngas kann dann beispielsweise in einem nachgeschalteten Verbrennungsmotor zur Energiegewinnung eingesetzt werden. Da sowohl historisch, als auch aktuell, vor allem Holz als Biomasse zum Einsatz kommt, spricht man in der Regel auch von Holzvergasung.

Für die Biomassevergasung können unterschiedliche technische Anlagen eingesetzt werden, die sich vor allem durch die Art des Kontakts zwischen Biomasse und Vergasungsmittel (Luft, Sauerstoff oder Wasserdampf) unterscheiden. Dabei werden in der Regel drei grundsätzliche Reaktortypen genutzt, nämlich Festbettvergaser, Wirbelschichtvergaser und Flugstromvergaser. Auf der Basis der Art der Wärmebereitstellung für den Vergasungsprozess lassen sich Vergasertypen weiterhin in allotherme und autotherme Vergaser unterscheiden. Bei der allothermen Wärmezufuhr wird die Prozesswärme von außen zugeführt, während sie bei der autothermen Variante durch Teilverbrennung des Einsatzmaterials erzeugt wird.

Bei jeder Art der Holzvergasung, insbesondere aber bei drucklosen, autothermen Gleichstromvergasern, die nach dem Verfahren der vollkommenen Reduktion der Oxidationsprodukte zu Produktgas arbeiten, fallen mit dem erzeugten Produktgas kontinuierlich Holzasche, Holzkohlenstaub und Holzkohlengrus an. Auch können sich im Gas noch Teer- oder Pyrolyserückstände aus Kohlenstoff befinden. Alle diese Verunreinigungen beschädigen den Verbrennungsmotor, in dem das Produktgas verwertet wird.

Bisher bekannte Verfahren und Vorrichtungen fokussieren sich im Wesentlichen darauf, sämtliche dieser Verunreinigungen mechanisch aus dem Produktgas zu entfernen. Entsprechende Aufbereitungsvorrichtungen sind dem Fachmann beispielsweise aus der EP 1 870 444 A2 und der DE 10 2010 037 768 A1 bekannt. Sie enthalten Filterelemente in Form von Filterkerzen, durch die das Produktgas von einer Rohgasseite zu einer Reingasseite geleitet wird.

In der EP 1 870 444 A2 werden Filterkerzen aus feingewebten SiO₂-Matten verwendet, in die das Produktgas mit einer hohen Temperatur von 500°C bis 800°C eintritt. Hierbei sollen zudem chemische Nachreaktionen die Teer- und Pyrolyserückstände chemisch reduzieren. In der Praxis hat sich jedoch gezeigt, dass derartige Reaktionen tatsächlich kaum stattfinden. Dies führt zu hartnäckigen Verunreinigungen der Filterkerzen. Selbst die beschriebenen Reinigungspulse mit Druckluft führen nur zum Abplatzen von Kohlenstoffflecken in der Größe eines 2-EUR-Stücks und nicht der gesamten Schicht Kohlenstoff. Die Flecken füllen sich schnell wieder, da der Gasstrom durch sie bevorzugt hindurchtritt. Somit ist ein häufiges Reinigen der Filter erforderlich, was den Betrieb unterbricht.

In der DE 10 2010 037 768 A1 wird dem Produktgas hingegen Umgebungsluft beigemischt. Die Eintrittstemperatur in den Filter soll hierbei bei mindestens 480°C liegen, was durch entsprechende Luftzufuhr geregelt wird. Ziel ist ein ständiges Freibrennen des Filters durch teilweises Verbrennen von Produktgas. Dies birgt jedoch den Nachteil, dass es zum einen eine Reduktion des Energiegehalts zur Folge hat, zum anderen unter Umständen sogar Gefahrenpotential birgt.

Es ist daher Aufgabe der Erfindung, ein Verfahren und eine Aufbereitungsvorrichtung der eingangs genannten Art anzugeben, die einen möglichst unterbrechungsfreien Betrieb mit hohem Wirkungsgrad ermöglichen. Diese Aufgabe wird bezüglich des Verfahrens erfindungsgemäß dadurch gelöst, dass in dem Filterelement eine Temperatur zwischen 380°C und 440°C eingestellt wird, so dass in dem Filterelement eine Teiloxidation von Restkohlenstoff in Asche erfolgt.

Bezüglich der Aufbereitungsvorrichtung wird die Aufgabe dadurch gelöst, dass das Temperatureinstellelement des Filterelements eine Temperatur zwischen 380°C und 440°C in dem Filterelement einstellt, so dass in dem Filterelement eine Teiloxidation von Restkohlenstoff in Asche erfolgt. Das Temperatureinstellelement ist dabei vorteilhafterweise als im Gasstrom angeordneter Wärmetauscher ausgebildet, dessen Kühlmediumsstrom in der Art einer Regelung abhängig von der durch eine Temperatursonde im Filter gemessenen Temperatur gesteuert wird.

Die Erfindung geht dabei von der Überlegung aus, dass ein besonders hoher Wirkungsgrad dadurch erreicht werden könnte, dass ein Verbrennen von Produktgas im Filterelement vermieden wird. Gleichzeitig sollen aber hartnäckige Verunreinigungen im Filter ebenfalls unterbleiben, da diese eine Betriebsunterbrechung der Aufbereitungsvorrichtung zur Folge hat. Hierbei hat sich in umfangreichen Versuchen und Modellrechnungen überraschend herausgestellt, dass im engen Temperaturbereich zwischen 380°C und 440°C eine Verbrennung von Produktgas weitgehend vermieden wird, aber dennoch eine Teiloxidation des Restkohlenstoffs in Asche stattfindet. Im Gegensatz zu bisher bekannten Methoden, bei denen bei hohen Temperaturen eine Verbrennung von Produktgas zur Mitverbrennung der Teer- und Pyrolyserückstände vorgesehen war, wird durch den hier vorgeschlagenen Temperaturbereich praktisch eine weitere Vergasungsreaktion eingeleitet, nämlich beispielsweise der Kohlenstoffreste in weiter brennbares Kohlenmonoxid. Die Aufbereitungsvorrichtung fungiert dabei nicht mehr nur als Filter, sondern auch als weiterer Vergaser der noch nicht vergasten Kohlenstoffreste im Produktgas aus dem eigentlichen vorgeschalteten Biomassevergaser. Damit wird sowohl eine Verbrennung von Produktgas vermieden, andererseits eine nahezu vollständige Umwandlung des Restkohlenstoffes am Filter in Gas und Asche erreicht.

Weiter optimiert werden Wirkungsgrad und Unterbrechungsfreiheit durch eine noch engere Einschränkung des Temperaturbereichs, indem nämlich vorteilhafterweise in dem Filterelement eine Temperatur zwischen 400°C und 420°C eingestellt wird.

Bezüglich der Aufbereitungsvorrichtung stellt das Temperatureinstellelement also vorteilhafterweise eine Temperatur zwischen 400°C und 420°C in dem Filterelement ein.

Vorteilhafterweise beträgt das Volumenverhältnis von durch die Luftzuführunug zugeführter Luft zu durch die Produktgaszuführung zugeführtem Produktgas weniger als 1:50. Hierdurch wird einerseits die beschriebene Teiloxidation noch ermöglicht, andererseits die Entstehung eines brennbaren Gasgemisches im Filter vermieden.

In einer weiteren vorteilhaften Ausgestaltung der Aufbereitungsvorrichtung weist diese eine im Wesentlichen zylindermantelförmige Ummantelung auf und Produktgaszuführung und Luftzuführung sind tangential zur Mantelfläche der Ummantelung angeordnet. Hierdurch wird das Produktgas in eine zyklonartige Rotation innerhalb der Ummantelung versetzt, wodurch eine besonders gute Durchmischung von Luft und Produktgas erreicht wird. Zweckmäßigerweise sind Luftzuführung und Produktgaszuführung derart angeordnet, dass Luft und Produktgas in gleicher Rotationsrichtung in die Ummantelung eingeführt werden.

In weiterer vorteilhafter Ausgestaltung des Verfahrens wird das Filterelement zyklisch gereinigt wird, wobei es mit Druckgas derart beaufschlagt wird, dass ein richtungsumgekehrter Gasstrom durch das Filterelement entsteht. Unter zyklischem Reinigen wird hierbei die zeitlich regelmäßige oder anhand eines vorbestimmten Auslösers veranlasste Durchführung eines Reinigungszyklus verstanden, der sich vom Normalbetrieb unterscheidet. Vorteilhafterweise kann dabei als Auslöser das Erreichen einer bestimmten Druckdifferenz zwischen Rein- und Rohgasseite des Filterelements dienen, die durch entsprechende Drucksensoren festgestellt wird. Im Reinigungszyklus wird mittels Druckgas von hohem Druck, d.h. mehreren bar ein im Gegensatz zum Normalbetrieb umgekehrter schneller Gasstrom durch das Filterelement entsteht, d.h. von der Reingasseite zur Rohgasseite. Da durch den vorgenannten Temperaturbereich lediglich Aschereste und keine Kohlenstoffreste das Filterelement auf der Rohgasseite verunreinigen, platzen diese leicht ab und der Filter ist schnell und vollständig zu reinigen.

Bezüglich der Aufbereitungsvorrichtung umfasst diese hierzu vorteilhafterweise eine Druckgasdüse, ausgebildet zum Beaufschlagen des Filterelements mit Druckgas auf der der Produktgaszuführung abgewandten Seite des Filterelements, d.h. der Reingasseite.

In vorteilhafter Ausgestaltung wird beim Reinigen Stickstoff als Druckgas verwendet. Bezüglich der Aufbereitungsvorrichtung ist daher vorteilhafterweise der Druckgasdüse ein Stickstoffbehälter vorgeschaltet. Beim Reinigen des Filterelements mit Luft allgemein und insbesondere bei den vorliegenden niedrigeren Temperaturen besteht nämlich die Gefahr einer Verpuffung oder Explosion, da der eingeblasene Sauerstoff ggf. nicht sofort verbrennt sondern sich zunächst anreichert. Durch die inerten Eigenschaften des Stickstoffs wird diese Gefahr zuverlässig vermieden.

Durch die oben genannten Randbedingungen hinsichtlich Luftzufuhr und Temperatur im Filterelement wird die Häufigkeit der Reinigung der Filterelemente minimiert. Um auch während den vergleichsweise selteneren Reinigungszyklen einen vollkommen unterbrechungsfreien Betrieb zu gewährleisten, umfasst die Aufbereitungsvorrichtung vorteilhafterweise eine Mehrzahl von Filterelementen, d.h. das Produktgas aus dem Biomassevergaser wird vorteilhafterweise einer Mehrzahl von Filterelementen zugeführt. Dabei wird dann vorteilhafterweise stets nur eine Teilmenge der Mehrzahl gleichzeitig gereinigt. Mit anderen Worten: Die Aufbereitungsvorrichtung ist zumindest auf der Reingasseite mindestens zweigeteilt. Beim Reinigen eines ersten Teils der Filterelemente übernehmen die übrigen Filterelemente den kompletten Volumenstrom des Produktgases. Der Betrieb läuft damit ohne Störung weiter. Anschließend wird ein anderer Teil oder der gesamte übrige Teil der Filterelemente gereinigt.

In weiterer vorteilhafter Ausgestaltung der Aufbereitungsvorrichtung ist besteht das Filterelement oder bestehen die Filterelemente überwiegend aus Keramikfasern. Die Keramikfilterelemente sind vorteilhaft mittels Vakuum-Tiefziehen hergestellt. Keramikfasern sind besonders hitzebeständig und weisen die für die Anwendung als Filter notwendigen porösen Strukturen auf.

Eine Kraftwerksanlage umfasst vorteilhafterweise einen Biomassevergaser, und eine hier beschriebene, dem Biomassevergaser produktgasaustrittsseitig nachgeschaltete Aufbereitungsvorrichtung. Der Biomassevergaser ist dabei vorteilhafterweise als Festbestvergaser ausgelegt. Gerade bei Festbettvergasern, insbesondere solchen im Gleichstromverfahren (d.h. Produktgas und Luft bewegen sich im Bereich eines Gitterrostes in gleicher Richtung), bei dem die Luft unmittelbar über dem Gitterrost direkt in die heiße Vergasungszone des Ofens zugeführt und unter dem Gitterrost abgesaugt wird, werden durch die endlichen Abstände des Gitters unvermeidlich Kohlenstoffreste mit dem Produktgasstrom mitgerissen. Hier ist eine besonders gute Aufbereitung des Produktgases erforderlich.

Die mit der Erfindung erzielten Vorteile bestehen insbesondere darin, dass durch die Kombination einer Lufteindüsung zusammen mit einer eng begrenzten Filtertemperatur zwischen 380°C und 440°C, besser 400°C und 420°C in einer Aufbereitungsvorrichtung für das Produktgas eines Biomassevergasers eine vergleichsweise vollständige Vergasung von Restkohlenstoff im Produktgas erreicht wird. Die Umwandlung des Kohlenstoffs in Gas und Asche beseitigt das Problem sich schnell mit hartnäckiger Kohlenstoffverschmutzung zusetzender Filterkerzen. Eine auf der Filterkerze verbleibende Ascheschicht platzt zuverlässig durch entsprechende Druckgasbeaufschlagung ab. Der Wirkungsgrad wird erhöht und ein unterbrechungsfreier Betrieb gewährleistet.

Ein Ausführungsbeispiel der Erfindung wird anhand einer Zeichnung näher erläutert. Darin zeigen:
- FIG 1: eine schematische Schnittzeichnung einer Aufbereitungsvorrichtung für das Produktgas eines Biomassevergasers und
- FIG 2: eine schematische Darstellung einer Kraftwerksanlage mit einem Biomassevergaser und der Aufbereitungsvorrichtung.

Gleiche Teile sind in allen Figuren mit denselben Bezugszeichen versehen.

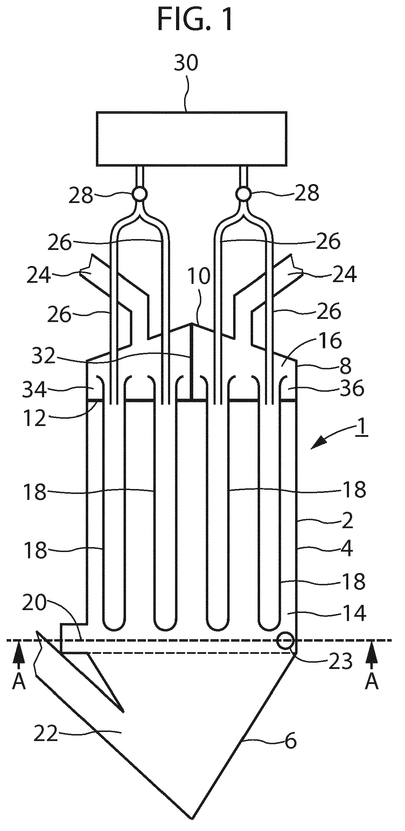

FIG 1 zeigt eine Aufbereitungsvorrichtung 1 für Produktgas aus einem Biomassevergaser im Schnitt. Die Aufbereitungsvorrichtung 1 weist eine Ummantelung 2 auf, die in einem mittleren Bereich 4 zylindermantelförmig ist, in einem unteren Bereich 6 konisch zusammenläuft und in einem oberen Bereich 8 durch einen Deckel 10 verschlossen ist. Bis auf die im Folgenden beschriebenen Öffnungen ist die Ummantelung 2 gasdicht abgeschlossen.

Der Innenraum der Ummantelung 2 ist zwischen oberem Bereich 8 und mittlerem Bereich 6 durch eine waagerechte Trennwand 12 in eine untere Rohgasseite 14 und eine obere Reingasseite 16 unterteilt. Durch die Trennwand 12 ragt eine Mehrzahl von Filterelementen 18 über nahezu die gesamte Länge des mittleren Bereichs 4 in Form von Filterkerzen in die Rohgasseite 14 hinein. Diese sind zylindrisch ausgebildet und an ihrer Unterseite auf der Rohgasseite 14 verschlossen. Die Filterelemente 18 sind im Vakuum-Tiefziehverfahren aus Keramikfaser gebildet.

Da die Trennwand 12 Rohgasseite 14 und Reingasseite 16 ebenfalls gasdicht voneinander trennt, ist ein Gasdurchlass von Rohgasseite 14 zu Reingasseite 16 nur durch die Filterelemente 18 möglich. Auf der Rohgasseite 14 wird das Produktgas des in FIG 1 nicht näher gezeigten Biomassevergasers über eine Produktgaszuführung 20 tangential am unteren Ende des mittleren Bereichs 4 eingeführt. Dabei wird das einströmende Produktgas zyklonartig in eine kreisförmige Bewegung versetzt, so dass feste Bestandteile und Asche bereits durch die Fliehkraft nach außen an die Wände der Ummantelung 2 getragen werden und nach unten fallen. Am tiefsten Punkt des unteren Bereichs ist ein gasdicht verschließbarer Entleerungskanal 22 vorgesehen, um die ausfallenden festen Bestandteile zu entfernen.

Das Produktgas tritt durch die Filterelemente 18 in den oberen Bereich 8 unter dem Deckel 10 ein und wird durch Reingasausleitungen 24 einem in FIG 1 nicht näher dargestellten Verbrennungsmotor zur Stromerzeugung zugeführt. Dabei bleiben feste Bestandteile aus dem Produktgas auf der Rohgasseite 14 an den Filterelementen 18 hängen.

Durch eine in Bezug auf die Achse des Zyklons gegenüberliegende, ebenfalls tangential angeordnete Luftzuführung 23 wird in die Ummantelung 2 und damit den Filterelementen 18 auf der Rohgasseite 14 Umgebungsluft zugeführt. Die Strömungsrichtung entspricht dabei der Richtung der zyklonartigen Bewegung des Produktgases, so dass eine besonders gute Vermischung von Produktgas und Luft erreicht wird.

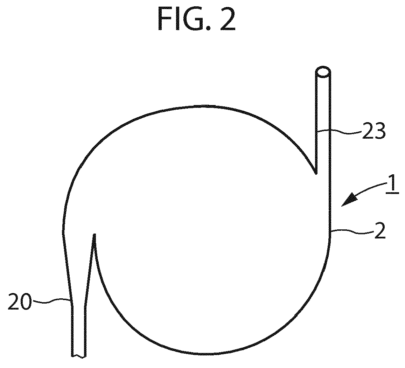

Die eben beschriebene Anordnung von Produktgaszuführung 20 und Luftzuführung 23 ist in der FIG 2 in einem Querschnitt entlang der Linie A-A in der FIG 1 verdeutlicht. Die Ummantelung 2 weist in diesem Bereich eine Stufe mit einer in Abweichung von der Kreisform im darüberliegenden Bereich spiralförmigen Außenform auf. Hierdurch wird eine natürliche Ausbuchtung gebildet, die Platz für eine tangentiale Einführung des Produktgases durch die Produktgaszuführung 20 bildet. Auf der in radialer Richtung gegenüberliegenden Seite ist die Luftzuführung 23 derart angeordnet, dass Luft in tangential in gleicher Rotationsrichtung zugeführt wird.

Der Luftanteil der durch die Luftzuführung 23 zugeführten Luft im Verhältnis zum Produktgas liegt hierbei im Bereich von wenigen Promille bis maximal 1-2 Volumen-%. Ein höherer Luftanteil führt nämlich zu einem brennbaren Gasgemisch im Filter und ist daher sicherheitskritisch. Zusätzlich ist der Innenraum der Ummantelung 2 und damit auch die Filterelemente 18 auf einer gleichbleibenden Temperatur zwischen 400°C und 420°C gehalten. Dies erfolgt mittels eines nicht näher gezeigten Kühlers, d.h. Wärmetauschers an der Produktgaszuführung 20. Dessen Kühlmediumsstrom wird durch eine ebenfalls nicht näher gezeigte Temperaturmesseinrichtung im Bereich der Filterelemente 18 in der Art einer Regelung gesteuert.

Die beschriebene Temperatur führt dazu, dass noch im Produktgas befindliche Kohlenstoffreste nur teiloxidiert und damit vergast werden. Dabei wird aber kein Produktgas verbrannt, da eine Gasphasenreaktion zwischen Luft und Gas erst bei erheblich höheren Temperaturen erfolgen würde. Übrig bleibt lediglich Asche, die sich auf der Rohgasseite 14 an den Filterelementen 18 ablagert.

Da die Asche sich gegenüber Kohlenstoffresten leichter von den Filterelementen 18 löst, wird durch die oben beschriebene Ausgestaltung bereits ein vergleichsweise gleichmäßiger Differenzdruck über die Filterelemente 18 erreicht. Es kann jedoch dennoch erforderlich sein, die Filterelemente 18 von abgelagerter Asche zu reinigen. Hierzu sind Druckgasdüsen 26 für jedes der Filterelemente 18 vorgesehen. Diese sind ebenfalls zylinderförmig ausgestaltet, weisen aber einen wesentlich geringeren Außendurchmesser auf als der Innendurchmesser der Filterelemente 18. Sie ragen auf der Reingasseite 16 in die Filterelemente 18 hinein.

Die Druckgasdüsen 26 sind über Ventile 28 an einen Stickstoffbehälter 30 angeschlossen. Dieser enthält Stickstoff unter hohem Druck von 6 bar. Durch die Druckgasdüsen 26 wird durch Öffnung der Ventile 28 Stickstoff mit hohem Druck auf der Reingasseite 16 in die Filterelemente 18 geleitet. Dabei werden betroffene Reingasausleitungen 24 verschlossen, da sonst der eingebrachte Stickstoff und Druck über die Reingasausleitungen 24 sofort entweichen würde. In der Folge kehrt sich der Gasstrom durch die Filterelemente 18 um und die Ascheschicht auf der Außenseite der Filterelemente 18 platzt ab. Diese Reinigung findet in Form eines Reinigungszyklus statt, wenn mittels entsprechender nicht dargestellter Druckmesseinrichtungen auf Reingasseite 16 und Rohgasseite 14 ein Überschreiten eines vorgegebenen Differenzdrucks über die Filterelemente 18 festgestellt wird. In einer alternativen Ausführungsform kann der Reinigungszyklus zeitlich gesteuert regelmäßig stattfinden.

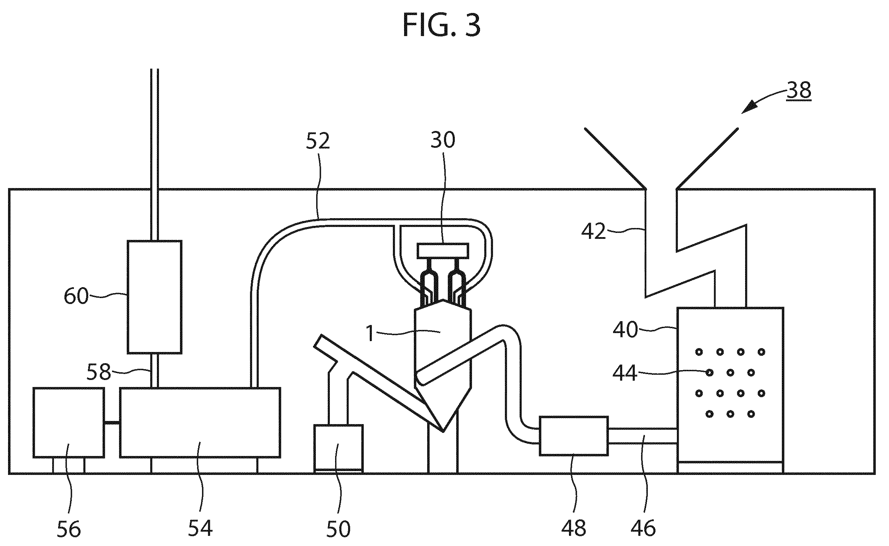

In einer alternativen Ausführungsform kann der Stickstoffbehälter 30 anstatt mit Stickstoff auch mit Kohlendioxid gefüllt werden. Besonders vorteilhaft kann auch Abgas des noch in FIG 3 beschriebenen Verbrennungsmotors zur Füllung verwendet werden.

Damit für den oben beschriebenen Reinigungszyklus der Betrieb des angeschlossenen Verbrennungsmotors nicht unterbrochen wird, findet der Reinigungszyklus in zwei Abschnitten statt: Der Innenraum der Ummantelung 2 ist auf der Reingasseite 16 durch eine mittige senkrechte Trennwand 32 gasdicht in zwei Bereiche 34, 36 getrennt. Jeder der Bereiche 34, 36 weist eine der Reingasausleitungen 24 auf. Die Druckgasdüsen 26 der Filterelemente 18 werden pro Bereich 34, 36 von einem separaten Ventil 28 gesteuert.

Die Reinigung findet nun nacheinander in jedem der Bereiche 34, 36 statt, d.h. zuerst werden beispielsweise die Filterelemente 18 im linken Bereich 34 gereinigt, indem dort die linke Reingasausleitung 24 verschlossen und das linke Ventil 26 geöffnet wird. Währenddessen führt der gesamte Volumenstrom von der Produktgaszuführung 20 zur rechten Reingasausleitung 24, d.h. nur durch die Filterelemente 18 des rechten Bereichs 36. Sobald die Reinigung der Filterelemente 18 im linken Bereich 34 für eine bestimmte Zeitdauer erfolgt ist, wird hier die Reingasausleitung 24 wieder geöffnet und das linke Ventil 28 geschlossen. Anschließend findet derselbe Prozess der Reinigung im rechten Bereich 36 statt. Dies kann selbstverständlich auch in umgekehrter Reihenfolge erfolgen.

Die in FIG 1 und FIG 2dargestellte Aufbereitungsvorrichtung 1 ist Bestandteil einer Kraftwerksanlage 38, die lediglich schematisch in FIG 3 dargestellt ist. Die Kraftwerksanlage 38 umfasst einen Biomassevergaser 40, der als Festbettvergaser ausgebildet ist, d.h. die Brennstoffe, die durch die Brennstoffzuführung 42 von oben in den Biomassevergaser 40 gegeben werden, liegen wie in einem normalen Feuerofen auf einem Gitterrost.

Der gezeigte Biomassevergaser 40 arbeitet autotherm, d.h. die Prozesswärme wird durch Teilverbrennung des Brennstoffes erzeugt. Weiterhin arbeitet der gezeigte Biomassevergaser 40 im Gleichstromverfahren, bei dem Vergasungsmittel wie Luft und Wasserdampf in mehreren Schichten durch Düsen 44 unmittelbar über dem Gitterrost direkt in die heiße Vergasungszone des Biomassevergasers 40 zugeführt werden. Produktgas und Vergasungsmittel bewegen sich dabei im Bereich des Gitterrostes in gleicher Richtung (im Gleichstrom). In anderen Ausführungsbeispielen können auch andersartige Biomassevergaser 40 zur Anwendung kommen.

Durch die Rohgasleitung 46 wird das erzeugte Produktgas in der in FIG 1 und FIG 2 beschriebenen Weise der Aufbereitungsvorrichtung 1 zugeführt und dort in der ebenfalls in Bezug auf FIG 1 und FIG 2 beschriebenen Weise aufbereitet. Die Rohgasleitung 46 weist einen Wärmetauscher 48 zur Kühlung des Produktgases auf. Die in der Aufbereitungsvorrichtung 1 entstehende Asche wird in einem Sammelbehälter 50 gesammelt.

Das in der Aufbereitungsvorrichtung 1 aufbereitete Reingas wird über eine Reingasleitung 52 in einen Verbrennungsmotor 54 geführt. Die hier erzeugte rotatorische Energie wird in einem an den Verbrennungsmotor 54 angeschlossenen Generator 56 in elektrische Energie umgewandelt. Die Abgase aus dem Verbrennungsmotor werden durch eine Abgasleitung 58 aus dem Verbrennungsmotor 54 ausgeleitet, wobei die Abgasleitung 58 ebenfalls einen Wärmetauscher 60 zur Nutzung der im Abgas enthaltenen Wärmeenergie aufweist.

### Bezugszeichenliste

- 1: Aufbereitungsvorrichtung
- 2: Ummantelung
- 4: mittlerer Bereich
- 6: unterer Bereich
- 8: oberer Bereich
- 10: Deckel
- 12: Trennwand
- 14: Rohgasseite
- 16: Reingasseite
- 18: Filterelement
- 20: Produktgaszuführung
- 22: Entleerungskanal
- 23: Luftzuführung
- 24: Reingasausleitung
- 26: Druckgasdüse
- 28: Ventil
- 30: Stickstoffbehälter
- 32: Trennwand
- 34: linker Bereich
- 36: rechter Bereich
- 38: Kraftwerksanlage
- 40: Biomassevergaser
- 42: Brennstoffzuführung
- 44: Düsen
- 46: Rohgasleitung
- 48: Wärmetauscher
- 50: Sammelbehälter
- 52: Reingasleitung
- 54: Verbrennungsmotor
- 56: Generator
- 58: Abgasleitung
- 60: Wärmetauscher

## Patentansprüche

1. Verfahren zur Aufbereitung des Produktgases eines Biomassevergasers (40), bei dem das Produktgas einem Filterelement (18) zugeführt wird, und dem Filterelement (18) Luft zugeführt wird,
**dadurch gekennzeichnet, dass** in dem Filterelement (18) eine Temperatur zwischen 380°C und 440°C eingestellt wird, so dass in dem Filterelement (18) eine Teiloxidation von Restkohlenstoff in Asche erfolgt.

2. Verfahren nach Anspruch 1, bei dem in dem Filterelement (18) eine Temperatur zwischen 400°C und 420°C eingestellt wird.

3. Verfahren nach einem der vorhergehenden Ansprüche, bei dem das Volumenverhältnis von zugeführter Luft zu zugeführtem Produktgas weniger als 1:50 beträgt.

4. Verfahren nach einem der vorhergehenden Ansprüche, bei dem das Filterelement (18) zyklisch gereinigt wird, wobei es mit Druckgas derart beaufschlagt wird, dass ein richtungsumgekehrter Gasstrom durch das Filterelement (18) entsteht.

5. Verfahren nach Anspruch 4, bei dem Stickstoff als Druckgas verwendet wird.

6. Verfahren nach Anspruch 4 oder 5, bei dem das Produktgas einer Mehrzahl von Filterelementen (18) zugeführt wird, und nur eine Teilmenge der Mehrzahl gleichzeitig gereinigt wird.

7. Aufbereitungsvorrichtung (1) für das Produktgas eines Biomassevergasers (40), umfassend ein Filterelement (18) mit einer Produktgaszuführung (20), einer Luftzuführung (23) und einem Temperatureinstellelement,
**dadurch gekennzeichnet, dass** das Temperatureinstellelement eine Temperatur zwischen 380°C und 440°C in dem Filterelement (18) einstellt, so dass in dem Filterelement (18) eine Teiloxidation von Restkohlenstoff in Asche erfolgt.

8. Aufbereitungsvorrichtung (1) nach Anspruch 7, bei der das Temperatureinstellelement eine Temperatur zwischen 400°C und 420°C in dem Filterelement (18) einstellt.

9. Aufbereitungsvorrichtung (1) nach Anspruch 7 oder 8, bei der das Volumenverhältnis von durch die Luftzuführung (23) zugeführter Luft zu durch die Produktgaszuführung (20) zugeführtem Produktgas weniger als 1:50 beträgt.

10. Aufbereitungsvorrichtung (1) nach einem der Ansprüche 7 bis 9, die eine im Wesentlichen zylindermantelförmige Ummantelung (2) aufweist und bei der Produktgaszuführung (20) und Luftzuführung (23) tangential zur Mantelfläche der Ummantelung (2) angeordnet sind.

11. Aufbereitungsvorrichtung (1) nach einem der Ansprüche 7 bis 10, umfassend eine Druckgasdüse (26), ausgebildet zum Beaufschlagen des Filterelements (18) mit Druckgas auf der der Produktgaszuführung (20) abgewandten Seite des Filterelements (18).

12. Aufbereitungsvorrichtung (1) nach Anspruch 11, bei der der Druckgasdüse (26) ein Stickstoffbehälter (30) vorgeschaltet ist.

13. Aufbereitungsvorrichtung (1) nach einem der Ansprüche 7 bis 12, bei der das Filterelement (18) überwiegend aus Keramikfasern besteht.

14. Aufbereitungsvorrichtung (1) nach einem der Ansprüche 7 bis 13, umfassend eine Mehrzahl von Filterelementen (18).

15. Kraftwerksanlage (38), umfassend einen Biomassevergaser (40), und eine dem Biomassevergaser (40) produktgasaustrittsseitig nachgeschaltete Aufbereitungsvorrichtung (1) nach einem der Ansprüche 7 bis 14.
